# EUROPEAN PATENT APPLICATION

(11) **EP 3 292 782 A1**
(43) Date of publication of application: **14.03.2018**
(21) Application number: 16188130.5
(22) Date of filing: 09.09.2016
(51) Int. Cl.: A44B 19/06, A44B 19/42, B21D 53/52, B29D 5/02

(54) **STRINGER PRODUCTION METHOD AND SLIDE FASTENER OBTAINABLE THEREBY**

(71) Applicant: YKK Europe Limited, London EC1Y 4TW (GB)
(72) Inventor: KAWAHABA, Tomoyuki, 59501 Tekirdag (TR); ALAS, Mahmut, 59501 Tekirdag (TR)
(74) Representative: Sevinç, Erkan

(57) **Abstract**

The present invention proposes a method of manufacturing stringers for slide fasteners, the stringers comprising a tape (12) and a plurality of elements (11) attached thereon; wherein the method comprises partly wetting a provisioning means (60) with a coating liquid (55) such that a surface (61) of the provisioning means is at least partially covered at a wetted zone (62) with a film of coating liquid; and moving a stringer over the wetted zone (62), such that one or more element(s) (11) are dipped at a predetermined height into the film of coating liquid at the wetted zone to a depth less than the liquid film thickness and said one or more element(s) receive coating material onto their surface. The present invention further proposes a stringer and slide fastener obtainable with such method.

## Description

### Technical Field of the Invention

The present invention relates to slide fasteners, more specifically to stringers for slide fasteners with metallic elements, and a preparation method thereof.

### Background of the Invention

Zippers can be made of metal or plastic, the plastic ones either comprise individual elements (teeth) or a continuous spiral. Metal zippers are of two types those for which the elements are specially prepared at the start of the process and those where the elements, which are usually in a preformed wire, are cut and attached almost directly onto a piece of ribbon-like material known as a tape.

Zippers that have individual elements are attached to a special type of tape which has a cord passing down the edge of one side of the tape, such that the elements clamp around the cord.

Either before or after the attaching process, elements can be treated in a number of different ways which result in a surprising variety of colors. This provides an attractive range of options for a clothes designer in particular.

Generally, metallic elements on a slide fastener are all the same color, since they are all prepared in the same manner and attached at the same time. It is possible to treat elements for obtaining a random effect or to put a treatment on an element and then scrape some of the treatment off. But until now, regular treatment of the elements in order to obtain a pattern of them has not been very common. Such scrape-off processes e.g. using friction by a rotating brush can be considered demanding as they require high speed moving parts in a respective apparatus, which may often cause maintenance-related costs.

Furthermore, such scraping off methods lack precision when seeking to obtain clearly distinguishable visual appearance differences (in terms of e.g. color or shine) in treated and untreated portions of elements, since even if a predetermined surface portion is subjected to brushing, friction cannot be distributed evenly on the intended surface portion, and some friction is unintentionally and unavoidably applied to regions of the rest of the element. Thus, with such methods it is practically impossible to consistently obtain on a single element, two visually different surface portions, which are separated with high precision.

WO 2014/141409 A1 discloses a slide fastener chain with elements having two surface portions visually different from each other, one of which comprises a colored film and the other one comprises a gloss film. The visual difference between said two surface portions is obtained by scraping a corresponding surface portion off. Apparatus for such process requires significant mechanical energy, and has moving parts prone to often necessitate maintenance and repair; thus the operating costs for such process cannot be disregarded.

In WO 2015/033383 A1 the elements are made of polymeric material, and a top portion of each element is coated with a film.

WO 2013/051106 A1 discloses an at least three step process including inkjet printing, heating and washing; wherein the elements are made of polymeric material.

Thus, it is still a challenge to provide a reliable, simple, low-cost and high precision method for obtainment of stringers having elements with variable visual appearances.

### Objects of the Invention

Primary object of the present invention is to overcome the abovementioned shortcomings of the prior art.

Another object of the present invention is obtainment of a low-cost and highly consistent method for manufacturing stringers having elements with variable visual appearances.

Another object of the present invention is provision of high accuracy, precision and consistency between elements on such stringers.

A further object of the present invention is provision of a slide fastener comprising such stringers.

### Summary of the Invention

The present invention proposes a method of manufacturing stringers for slide fasteners, the stringers comprising a tape and a plurality of elements attached thereon; wherein the method comprises partly wetting a provisioning means with a coating liquid such that a surface of the provisioning means is at least partially covered at a wetted zone (62) with a film of coating liquid; and moving a stringer over the wetted zone, such that one or more element(s) are dipped at a predetermined height into the film of coating liquid at the wetted zone to a depth less than the liquid film thickness and said one or more element(s) receive coating material onto their surface. The present invention further proposes a stringer and slide fastener obtainable with such method.

### Brief Description of the Figure

The figures, a brief explanation of which is herewith provided, are solely intended for providing a better understanding of the present invention and are as such not intended to define the scope of protection or the context in which said scope is to be interpreted in the absence of the description.

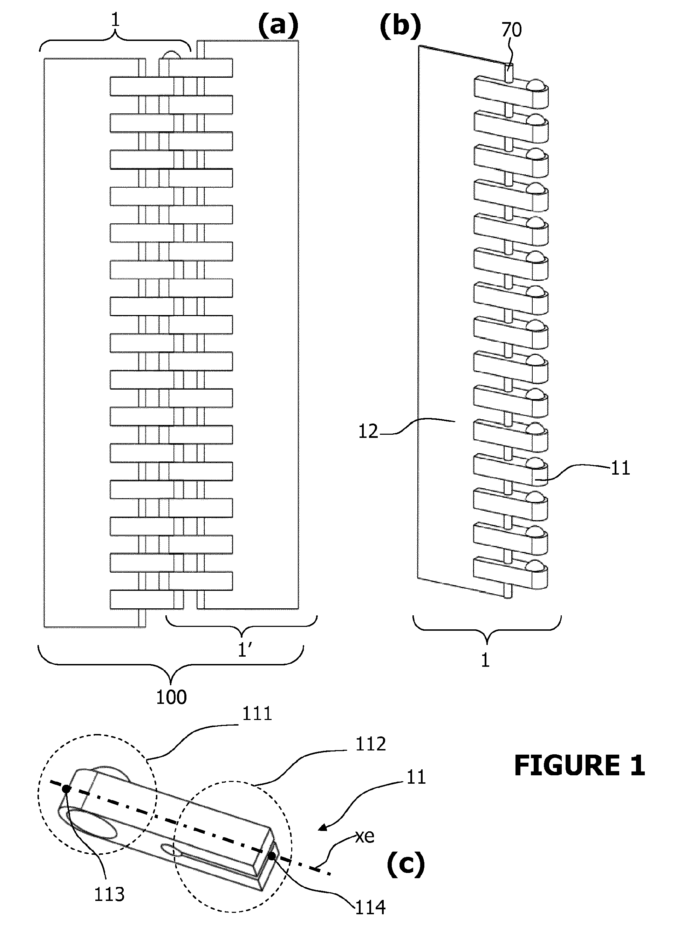

Figure 1 schematically shows (a) a slide fastener chain with individual elements (teeth); (b) a stringer for a slide fastener and (c) an untreated element in the form it takes when attached to a stringer.

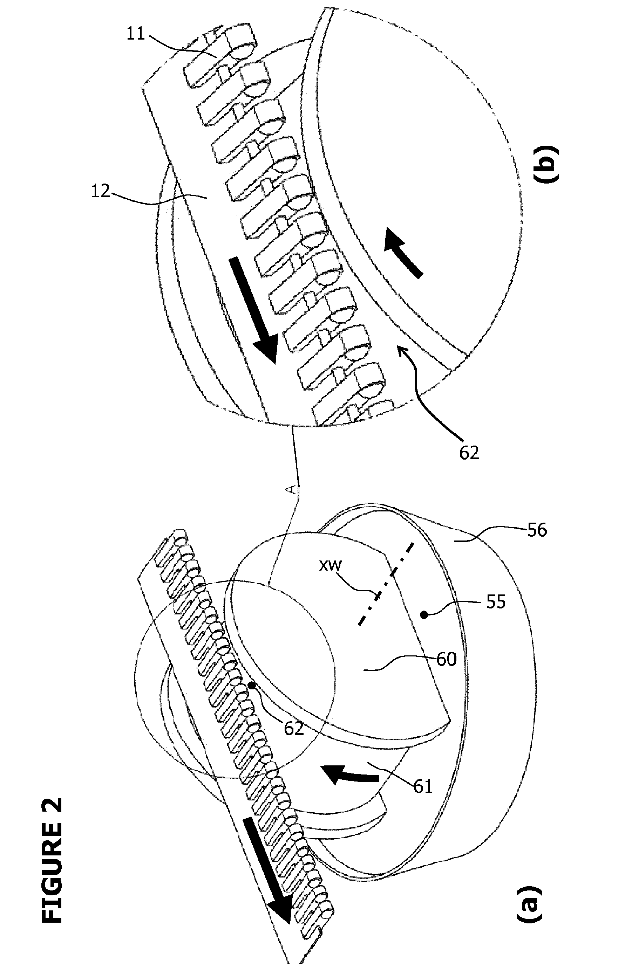

Figure 2 (a) schematizes an apparatus for performing the method at a first mode, and mainly shows the positioning of the stringer with respect to a wetted zone on the side surface of the wheel; and (b) is a more detailed view (A) of the same.

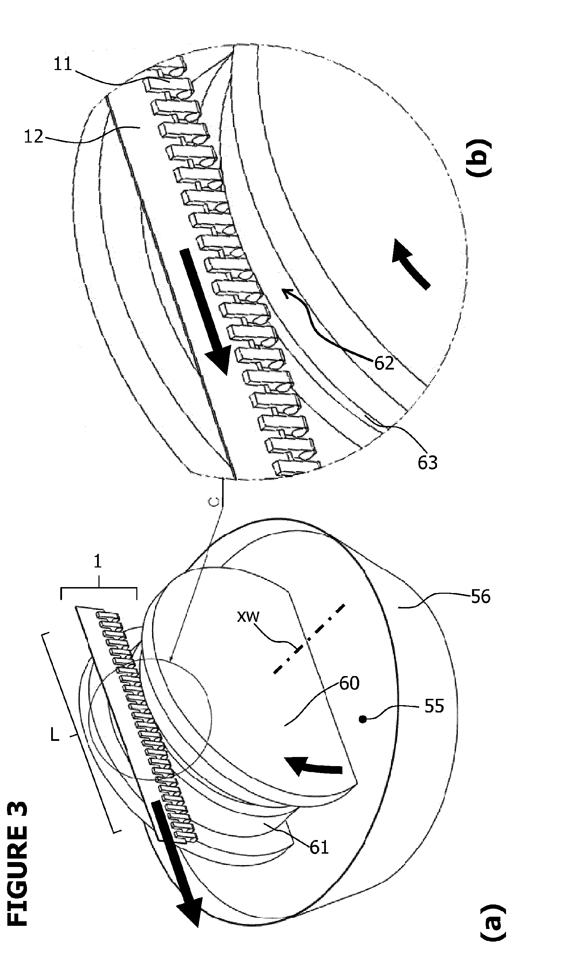

Figure 3 (a) schematizes an apparatus for performing the method at a second mode, and mainly shows the positioning of the stringer and thus of the elements with respect to a wetted zone on the side surface of the wheel; and (b) is a more detailed view (C) of the same.
Figure 4 (a) and (b) schematize alternative sides of a stringer obtainable with the first mode, where the visual difference between the first and second sides of the elements are emphasized; and (c) a stringer obtainable with the second mode of the method according to the present invention.

### Detailed Description of the Invention

Referring now to the figures outlined before, the present invention proposes a method of manufacturing a stringer (1) comprising elements (11), such that an element has a plurality of surface regions (115, 115' and 116, 116') with a plurality of visual appearances. The method comprises the following features:
- partly wetting a provisioning means (60) with a coating liquid (55) such that a surface (61) of the provisioning means is at least partially covered at a wetted zone (62) with a film of coating liquid,
- moving a stringer over the wetted zone (62), such that one or more element(s) (11) are dipped at a predetermined height into the film of coating liquid at the wetted zone to a depth less than the liquid film thickness and said one or more element(s) receive coating liquid onto their surface.

Upon contacting a surface portion of an element with the liquid film, an amount of coating film remains on the surface and thus said surface portion is coated with the coating liquid.

An exemplary version of the method according to the present invention comprises the following features:
a) partly dipping a cylindrical wheel (60) as the provisioning means, which is rotatable around a mainly horizontal central axis (xw), into a coating liquid (55) (e.g. in a coating liquid bath), such that the side surface (61) of the wheel is partly wetted with the coating liquid;
b) rotating the wheel around its central axis, such that an amount of the coating liquid is carried on the side surface of the wheel in form of a liquid film having a depth (not shown), corresponding to a liquid film thickness on a point on the side surface of the wheel (not shown);
c) longitudinally moving a stringer tangent to a wetted zone (62) of the side surface of the wheel, such that one or more element(s) (11) on the stringer are partly dipped into the liquid film at the wetted zone, and thus the element(s) are partly coated with the coating liquid.

The coating liquid (55) is preferably a composition dilutable in organic solvents, by containing a low polarity organic resin (e.g. epoxy resin). The coating liquid may be a lacquer.

Accordingly, upon drying (or curing etc.) the coating liquid coated on the element(s), a dried film of coating liquid is formed on the coated portions (115, 115') of an element (also known as 'teeth') which is insoluble in polar and ionic compositions such as oxidizing compositions employed in oxidizing baths for obtaining oxide films on metals or alloys in the technical field of metallurgy or metal chemistry. Formation of an oxide film on a surface portion of a metallic element will change the visual appearance of said surface portion. Thus, oxidizing a portion of the surface of a metallic element can be considered as a way of obtaining an element having a plurality of surface regions (115, 115' and 116, 116') with a plurality of respective visual appearances.

A dried form (or hardened, or cured form) of the coating liquid (e.g. at the coated portions of an element) may be optically transparent for keeping the surface between a core of the element and the outer surface of the coating at the coated portion visible. In that case, coated portions of the elements appear shinier than the non-coated portions, which is also considered as a further difference of visual appearance between said coated and non-coated portions.

The dried form of the coating liquid may also contribute to other different visual appearances (e.g. color) when compared to the non-coated portion of a partly coated element upon drying of the coating liquid on such element. The dried form of the coating liquid may be opaque (for instance by including one or more fillers, such as an inorganic filler suitable to be suspended in lacquers, into the coating liquid formulation; such fillers are known for a person skilled in the art) and/or colored (e.g. by including one or more pigments into the coating liquid formulation); such that after application of the coating liquid, the coated portions of the elements have a different color than the non-coated portions.

The drying (or hardening, or curing) of the coating liquid coated onto element surfaces can be performed by subjecting the treated stringers to e.g. standard atmospheric conditions, or an oven heated to a curing temperature of a resin in the coating liquid composition.

Preferably, the elements (or their visible surfaces before treatment with the proposed method) may comprise oxidizable (i.e. non-noble) metallic material (i.e. they are metallic elements made of an oxidizable metal or alloy). In a related aspect of the method according to the present invention, the elements may further be partly lacquered for protection of the portions to be coated (or lacquered) (115, 115') from any further treatment (such as coloring by oxidation) directed to the remaining (uncoated) portions (116, 116') of the metallic elements. Preferably, said metallic material comprises a copper alloy different oxides and salts of which having various visual properties, and more preferably brass by having a high mechanical strength thus by providing a long lifespan to a respective stringer.

Possibly, the stringer (1) is longitudinally slid on the zone along the full length (L) of the stringer, such that the treatment of the elements (i.e. partly coating with the coating liquid) is applied along the stringer.

Alternatively, by said longitudinal sliding of the stringer on the wetted zone, the stringer is at least once moved away from the wetted zone to a distance where the elements have no more contact with the wetted zone; such that some elements are kept without lacquer coating. In such case, a further decorative appearance is obtainable on the stringer, at which some parts thereof comprise partly coated elements, and some other parts of the stringer comprise non-coated elements.

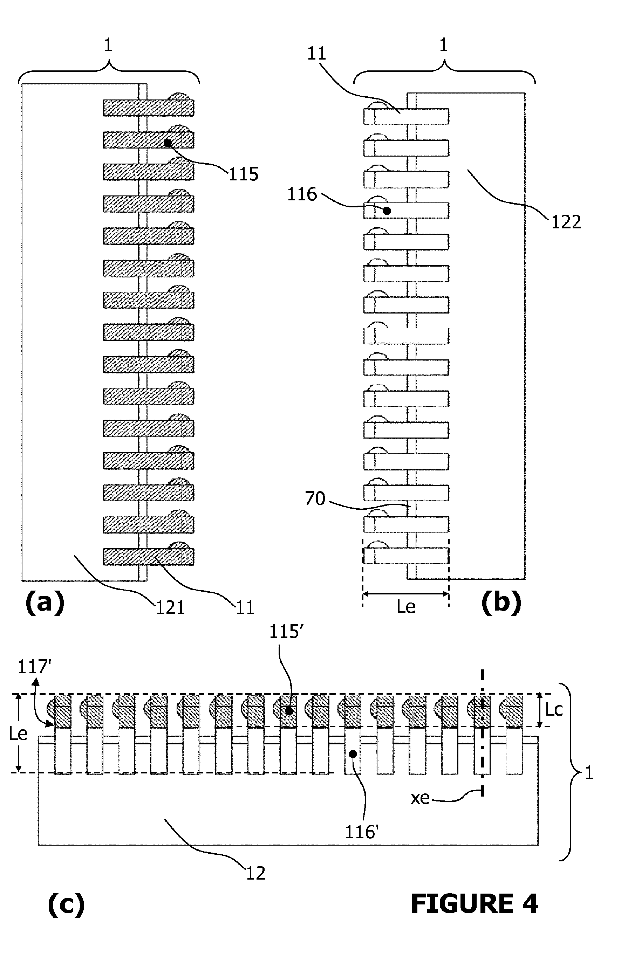

Elements individually attachable onto a tape in order to obtain a stringer, have a 'feet portion' for holding the tape around a cord (70) at the edge of the tape to which the elements are attached, and a 'head portion' portion distal to the feet portion for engaging with elements of another stringer. Additionally, a portion of the element, at a first planar side (121) of the tape can be named as 'first side portion' (depicted as shaded area 115 in Fig. 4a), and another portion of the element, at the opposite planar side (122) (i.e. a second planar side) of the tape can be named as 'second side portion' (depicted as shaded area 116 in Fig. 4b).

In a first application mode of the method according to the present invention (first mode), at the feature (c), first side portions (115) of element(s) on a stringer are contacted with the liquid film. To this end, at the sliding of the stringer tangent to the wetted zone (62), only a first planar side (121) of the tape faces the wetted zone (62). By increasing the depth of the liquid film and/or by changing the position of the stringer towards the central axis (xw) of the wheel, the neighboring surfaces of the element that contact the edges of the first side portions (115) may also be contacted with the liquid film. Said neighboring surfaces can also be defined as opposing surfaces of two adjacent elements at a portion of a stringer subjected to the method according to the present invention.

In a second application mode of the method according to the present invention (second mode), at the feature (c), the portion of an element dipped into the liquid film is a head portion thereof. To this end, at the sliding of the stringer tangent to the wetted zone (62), a planar side (121 or 122) of the tape is substantially perpendicular to the central axis (xw) of the wheel, and the head portions (111) of the elements are dipped into the liquid film on the wetted zone (62), keeping the feet portions (112) of said elements away from contacting the liquid film. Alternatively, a planar side (121 or 122) of the tape is positioned at an acute angle (having an angle between 0° and 90° where 90° is the right angle) to the central axis (xw) of the wheel, and the head portions (111) of the elements are dipped into the liquid film on the wetted zone (62), keeping the feet portions (112) of said elements away from contacting the liquid film.

Preferably, in this second mode, the side surface (61) of the wheel (60) comprises a circumferential groove (63) suitable for at least partly receiving and guiding the head portions (111) of the elements (11). This provides an enhanced precision, consistency and controllability of the process of partially coating the elements.

By longitudinally movement of the stringer tangent to the wetted zone, the elements are transferred away from the wetted zone upon being partly dipped into the liquid film. Afterwards, the partial coatings on the elements can be dried and a solid coating film (e.g. a lacquer layer if the coating liquid is a lacquer) can be obtained on the coated portions of the elements.

As an example to the coating layer, a lacquer formulation can be summarized as comprising a light transparent epoxy resin (70 to 75 %w/w), a hardener comprising a curing agent suitable for curing said epoxy resin (5 to 15 %w/w, preferably 7 to 10 %w/w), and a complementary amount of solvent (e.g. thinner), wherein the amounts are given with respect to the total weight of the coating liquid in a corresponding coating liquid bath to which the wheel is partly dipped. Since epoxy resins are known as non-polar substances, a solid coating film obtained from such composition is insoluble in ionic media (such as oxidizing baths) used for changing the visual appearance (for instance, coloring) of metallic surfaces.

In a case where the elements are metallic and the partially coating film on the elements is a lacquer layer, the coated portions of the elements have a shinier appearance in comparison with the non-coated portions thereof, since lacquer layer has a smoother surface (i.e. have less surface roughness) in comparison with the non-coated metallic surfaces.

Preferably, the method comprises further treatment of the elements with an oxidizing liquid composition. This can be achieved by spraying of the oxidizing liquid composition, or by dipping the elements or the stringer into a bath filled with such composition. Thanks to the method according to the present invention, metal surfaces at the coated portions of the elements are protected from contacting with the oxidizing composition, and the metal surfaces at the uncoated portions of the elements change visual appearance by contacting with the oxidizing composition. Useful oxidizing compositions for obtaining certain colors on surfaces of several metallic materials are known in the art. For instance, surfaces of copper alloys such as brass can be re-colored by chemically induced patina formation on the surfaces using suitable oxidizing compositions.

With the method according to the present invention, a high precision can be achieved at obtaining a plurality of zones on an element each zone comprising a different visual appearance from the other(s).

For the second mode, a coated length (Lc) can be defined as the minimum distance from a line (separation line, 117) where the coated portion is separated from the uncoated portion of the element, to the distal (farthest) end (113) of the head portion of the element.

In such case, experimental runs showed that ±0.1 mm of maximum deviation in the coated lengths (Lc) between neighboring elements may be obtained at a stringer with a coated length (Lc) of 1.35 mm; the coated length (Lc) being smaller then the element length (Le) which can be defined as the maximum distance between distal ends of the head portion and the feet portion of the elements. Such deviation remains within a confidence interval of ±10%, namely corresponds to a maximum deviation of about ±7% when the element length is normalized to 100%, which is considered a high level of consistency and reproducibility in the treatment of the elements.

The line between the coated (with the coating composition) and uncoated portions (i.e. portions not dipped into the coating composition) of the element clearly separates said both portions from each other, and both of the coated and uncoated portions are visually or otherwise clearly distinguishable from each other. With the method according to the present invention, the coated portions can be precisely and completely coated with the coating composition and completely protected from the effects of any further treatment such as those by an oxidizing liquid composition, and surfaces of the uncoated portions can be easily and completely kept free of the coating composition.

Such high precision and clear distinction between coated and uncoated portions of the elements are also available for both first and second modes since a number of controls can be applied including the depth of the liquid film on the wetted zone of the side surface of the wheel can be precisely arranged by adjusting the rotation speed of the wheel, the linear velocity of the stringer tangentially passing the wetted zone, and the flow properties (e.g. viscosity) of the coating liquid.

A longitudinal axis (xe) of an element can be definable as a theoretical line passing through a distal end (113) of the head portion (111) and a distal end (112) of the feet portion (114) with respect to each other. With the first mode, a separation line (not shown) between a coated zone (115, 115') and an uncoated zone (116, 116') is available; said line mainly being parallel to a longitudinal axis of the element. On the other hand, with the second mode, the separation line (117) mainly encircles the longitudinal axis (xe) of the element.

In a further aspect according to the present invention, the elements are further treated with a protective coating. The protective coating is preferably made of an optically transparent lacquer having a mechanical strength sufficient to protect the element obtained with any variation of the method disclosed above, against frictions arising in use of a slide fastener comprising such elements. The sufficient mechanical strength may be specified such that: more than 90% of the element surface covered by the protective coating remains still covered thereby after zipping and unzipping 500 times with a brass slider having an absolute value of linear velocity of 0.1 meters per second.

Accordingly, the present invention further claims a stringer for slide fasteners, obtained with the proposed method; and a slide fastener comprising such stringer.

Thus the following objects are achieved by the present invention:
- overcoming the abovementioned shortcomings of the prior art,
- provision of:
   - a low-cost and high-consistency method for manufacturing stringers having elements with non-uniform visual appearance,
   - high accuracy, precision and consistency between elements on such stringers,
   - slide fastener having such stringers.

Other methods of applying coating liquid to one or more surfaces will be apparent to those skilled in the art.

## Claims

1. A method of manufacturing a stringer (1) for slide fasteners, the stringers comprising a tape (12) and a plurality of elements (11) attached thereon; wherein the method comprises the following features:
- partly wetting a provisioning means (60) with a coating liquid (55) such that a surface (61) of the provisioning means is at least partially covered at a wetted zone (62) with a film of coating liquid,
- moving a stringer over the wetted zone (62), such that one or more element(s) (11) are dipped at a predetermined height into the film of coating liquid at the wetted zone to a depth less than the liquid film thickness and said one or more element(s) receive coating material onto their surface.

2. Method according to the claim 1, comprising drying or curing of the coating material received by the surface of the element(s).

3. Method according to any of the claims 1 or 2, comprising the following features:
a) partly dipping a cylindrical wheel (60) as the provisioning means, which is rotatable around a mainly horizontal central axis (xw), into a coating liquid (55), such that the side surface (61) of the wheel is partly wetted with the coating liquid;
b) rotating the wheel around its central axis, such that an amount of the coating liquid is carried on the side surface of the wheel in form of a liquid film having a depth (not shown), corresponding to a liquid film thickness on a point on the side surface of the wheel (not shown);
c) longitudinally moving a stringer tangent to a wetted zone (62) of the side surface of the wheel, such that one or more element(s) (11) on the stringer are partly dipped into the liquid film at the wetted zone, and thus the element(s) are partly coated with the coating liquid.

4. Method according to the claim 3, wherein at the feature (c), only a first planar side (121) of the tape (12) faces the wetted zone (62).

5. Method according to the claim 3, wherein a planar side (121 or 122) of the tape is mainly perpendicular to the central axis (xw) of the wheel, and the head portions (111) of the elements are dipped into the liquid film on the wetted zone (62), keeping the feet portions (112) of said elements away from contacting the liquid film.

6. Method according to claim 3, wherein a planar side (121 or 122) of the tape is positioned at an acute angle to the central axis (xw) of the wheel, and the head portions (111) of the elements are dipped into the liquid film on the wetted zone (62), keeping the feet portions (112) of said elements away from contacting the liquid film.

7. Method according to any of the claims 5 or 6, wherein the side surface (61) of the wheel (60) comprises a circumferential groove (63) suitable for at least partially receiving and guiding the head portions (111) of the elements (11).

8. Method according to any of the claims 1 to 7, wherein the coating liquid comprises one or more fillers in its formulation.

9. Method according to any of the claims 1 to 8, wherein the coating liquid comprises one or more pigments in its formulation.

10. Method according to any of the claims 1 to 9, wherein the dried form of the liquid film is optically transparent.

11. Method according to any of the claims 1 to 10, wherein the elements comprise an oxidizable metallic material and the coating liquid is a lacquer.

12. Method according to any of the claims 1 to 11, comprising further treatment of the elements with an oxidizing process.

13. Method according to any of the claims 1 to 12, comprising further treatment of the elements with a protective coating.

14. A Stringer obtained by the method according to any of the claims 1 to 13.

15. A Slide fastener comprising the stringer according to the claim 14.
